# EUROPÄISCHE PATENTSCHRIFT

(11) **EP 3 446 901 B1**
(45) Veröffentlichungstag und Bekanntmachung des Hinweises auf die Patenterteilung: **18.12.2019**
(21) Anmeldenummer: 17187498.5
(22) Anmeldetag: 23.08.2017
(51) Int. Cl.: B60H 1/34

(54) **LUFTABGABEVORRICHTUNG ZUM ABGEBEN VON LUFT IN EINEN INNENRAUM EINES FAHRZEUGS**
AIR DISCHARGE DEVICE FOR DISPENSING OF AIR INTO THE INTERIOR OF A VEHICLE
DISPOSITIF D'ÉVACUATION D'AIR PERMETTANT L'ÉVACUATION D'AIR DANS UN ESPACE INTÉRIEUR D'UN VÉHICULE

(43) Veröffentlichungstag der Anmeldung: 27.02.2019
(73) Patentinhaber: SMP Deutschland GmbH, 79268 Bötzingen (DE)
(72) Erfinder: Buchet, Yann, 67000 Strasbourg (FR)
(74) Vertreter: Westphal, Mussgnug & Partner Patentanwälte mbB

(56) Entgegenhaltungen:
- DE-A1-102004 048 331
- US-A1- 2009 093 206

## Beschreibung

Die vorliegende Erfindung betrifft eine Luftabgabevorrichtung zum Abgeben von Luft in einen Innenraum eines Personentransportmittels, insbesondere eines Fahrzeugs.

Luftabgabevorrichtungen werden unter anderem dann verwendet, wenn ein Innenraum eines Personentransportmittels belüftet oder klimatisiert werden soll. Das Personentransportmittel ist insbesondere als Fahrzeug ausgeführt, kann aber auch ein Schiff, ein Flugzeug, ein Zug oder dergleichen sein. Wenn im Folgenden die Erfindung in Bezug auf Fahrzeuge erläutert wird, gelten die Ausführungen gleichermaßen auch für andere Personentransportmittel wie Schiffe, Flugzeuge, Züge oder dergleichen.

In vielen Fällen wird die in den Innenraum abgegebene Luft vor ihrer Abgabe aufbereitet, beispielsweise gefiltert oder auf eine bestimmte Temperatur und/oder Luftfeuchtigkeit gebracht. Zudem wird die aufbereitete Luft mittels eines Gebläses gefördert, um einen ausreichend großen Luftstrom in den Innenraum befördern zu können. Um die aufbereitete Luft an der gewünschten Stelle in den Innenraum einleiten zu können, wird ein Führungskanal verwendet, welcher mit der Luftabgabevorrichtung kommuniziert.

Die Luftabgabevorrichtungen werden häufig auch als Luftdüsen, Lüftungsdüsen, Luftaustrittsdüsen oder Lüftungsklappen bezeichnet. Bekannte Luftabgabevorrichtungen umfassen im Wesentlichen von mehr oder weniger großen Öffnungen, die beispielsweise mittels eines Flügelgitters verkleidet sind. Die Flügelgitter dienen neben der Verkleidung insbesondere der Steuerung des Luftstroms hinsichtlich Stärke und Richtung in den Innenraum. Zwar kann die Richtung des Luftstroms in den Innenraum verändert werden, allerdings tritt die Luft relativ gerichtet aus den Luftabgabevorrichtungen aus, so dass ein mehr oder weniger starker Zug entsteht, der mitunter von den sich im Innenraum aufhaltenden Personen als unangenehm empfunden wird. Um den Innenraum spürbar belüften oder klimatisieren zu können, muss der in den Innenraum eingeleitete Luftstrom ausreichend groß sein. Daher müssen die Luftabgabevorrichtungen einen bestimmten Strömungsquerschnitt bereitstellen, der nicht unterschritten werden darf. Als Folge davon können die Luftabgabevorrichtungen nicht beliebig verkleinert werden und stellen somit ein den Innenraum in optischer Hinsicht prägendes Bauteil dar. Insbesondere bei Fahrzeugen ist die Innenraumgestaltung ein wichtiges Kaufargument, weshalb mitunter ein hoher Aufwand getrieben wird, um den Luftabgabevorrichtungen ein ansprechendes Design zu geben. Ein Beispiel, den Luftabgabevorrichtungen ein optisch unauffälligeres Aussehen zu verleihen, ist in der DE 603 09 767 T2 offenbart. Weitere derartige Beispiele sind in der US 2009/0093206 A1 und der DE 10 2004 048 331 A1 offenbart.

Der Spielraum bei der Gestaltung derartiger Luftabgabevorrichtungen ist relativ gering. Individualisierungen und Personalisierungen sind üblicherweise nicht möglich. Bei modernen Fahrzeugen wird eine Vielzahl von Informationen erzeugt, die zumindest dem Fahrer auch mitgeteilt werden sollten. Aufgrund der Vielzahl der vorliegenden Informationen ist es schwierig, diese dem Fahrer mitzuteilen, ohne ihn zu überfordern. Aufgabe einer Ausführungsform der vorliegenden Erfindung ist es daher, eine Luftabgabevorrichtung anzugeben, welche auf einfache Weise hergestellt werden kann, in optischer Hinsicht den Innenraum weniger prägt und welche die Luft weniger gerichtet abgibt. Zudem soll die Luftabgabevorrichtung so ausgestaltet sein, dass sie auf einfache Weise individualisierbar ist und zur Informationsanzeige verwendet werden kann.

Diese Aufgabe wird mit den in den Ansprüchen 1 und 12 angegebenen Merkmalen gelöst. Vorteilhafte Ausführungsformen sind Gegenstand der Unteransprüche.

Eine Ausführungsform der Erfindung betrifft eine Luftabgabevorrichtung zum Abgeben von Luft in einen Innenraum eines Personentransportmittels, insbesondere eines Fahrzeugs, umfassend ein Gehäuse, einen vom Gehäuse gebildeten Führungskanal zum Führen der Luft, wobei der Führungskanal zumindest eine mit dem Innenraum kommunizierende Öffnung aufweist, über welche die Luft in den Innenraum abgebbar ist, eine die Öffnung zumindest teilweise verschließende Textilblende mit einer zum Innenraum hinweisenden Sichtseite und einer zum Führungskanal hinweisenden Rückseite, wobei die Textilblende von der Luft beim Verlassen der Luftabgabevorrichtung durchströmt wird und die Textilblende zum Erzeugen von Lichteffekten auf der Sichtseite zumindest von der Rückseite zur Sichtseite hin durchleuchtbar ist, und mindestens eine Lichtquelle, mit welcher die Rückseite der Textilblende beleuchtbar ist.

Die vorschlagsgemäße Luftabgabevorrichtung kann sich beispielsweise über die gesamte Instrumententafel oder eine Fahrzeugtür erstrecken. Die Textilblende kann so ausgestaltet werden, dass sie sich dem unmittelbaren Umfeld in optischer Hinsicht anpasst und mehr oder weniger bündig mit dem Umfeld abschließt, so dass die Luftabgabevorrichtung als solche optisch kaum noch wahrzunehmen ist. Bei einer langgestreckten Ausführungsform gleicht die Luftabgabevorrichtung einer Zierleiste und tritt optisch nicht als Luftabgabevorrichtung in Erscheinung.

Die Textilblende wird von der Luft durchströmt, wenn sie den Führungskanal verlässt und in den Innenraum eingeleitet wird. Im Gegensatz zu den bekannten Luftaustrittsdüsen wird die Luft beim Durchtritt durch die Textilblende verwirbelt und tritt weniger gerichtet und stärker diffus in den Innenraum ein, so dass ein Zug verringert wird. Der Zug kann zudem aufgrund der Möglichkeit, die Luftabgabevorrichtung über eine relativ große Länge zu erstrecken, weiter verringert werden. Im Vergleich zu aufwendig gestalteten Flügelgittern kann die vorliegende Textilblende relativ kostengünstig bereitgestellt werden.

Mithilfe der Lichtquelle kann die Textilblende von der Rückseite her beleuchtet werden. Die Textilblende ist zumindest von der Rückseite zur Sichtseite hin durchleuchtbar. Folglich ist eine Beleuchtung der Textilblende von der Rückseite her vom Innenraum sichtbar, da aber die Lichtstrahlen die Textilblende durchqueren müssen und dabei insbesondere reflektiert, gebeugt und/oder gestreut werden, ist die Form der Lichtquelle nicht klar erkennbar, sondern es entstehen auf der Sichtseite Lichteffekte mit Mustern, die mehr oder weniger stark von der Form, Art und Anzahl der Lichtquelle abweichen. Es bietet sich an, die Lichtquelle als LED auszuführen.

Eine Individualisierung kann mit der Ausgestaltung der Textilblende selbst erfolgen. So kann beispielsweise die Farbe, der Textilstoff und die Verarbeitung des Textilstoffs individuell ausgewählt werden.

Eine Individualisierung kann auch durch die Anzahl der Lichtquellen sowie deren Farben, deren Abstand und deren Ausrichtung zur Textilblende erfolgen. Es ist möglich, die Farben nach einem bestimmten Muster zu ändern, welches der Fahrer auswählen oder selbst zusammenstellen kann. Dieses Muster kann auch fest vorgegeben und so ausgebildet sein, dass bestimmte Informationen übermittelt werden. Wenn die Luftabgabevorrichtung nicht in Betrieb ist, kann die Lichtquelle beispielsweise ausgeschaltet werden oder weiß strahlen. Wenn die Luftabgabevorrichtung warme Luft in den Innenraum einleitet, kann die Lichtquelle rot strahlen. Wenn die Luftabgabevorrichtung kalte Luft in den Innenraum einleitet, kann die Lichtquelle blau strahlen. Weiterhin kann die Farbe der Lichtquelle an andere verfügbare Informationen gekoppelt werden. So kann beispielsweise eine über längere Zeit andauernde Geschwindigkeitsüberschreitung ein rotes Blinken der Lichtquelle auslösen.

Es ist daher erfindungsgemäß möglich, einerseits die Luftabgabevorrichtung zu individualisieren und andererseits zur Visualisierung von Informationen zu nutzen.

Erfindungsgemäß ist die Textilblende translatorisch und/oder rotatorisch bewegbar im Führungskanal befestigt. Sowohl die rotatorische als auch die translatorische Bewegbarkeit ermöglichen es, die Textilblende in bestimmten Grenzen zu bewegen. Hierdurch ist es möglich, Durchtrittsspalte für die in den Innenraum strömende Luft zu öffnen oder zu schließen und so den Volumenstrom der strömenden Luft zu ändern. Wenn alle Durchtrittsspalte geschlossen sind, muss die Luft die Textilblende durchströmen, um in den Innenraum zu gelangen. Beim Durchströmen der Textilblende wird die Luft verwirbelt, so dass ein weitgehend zugfreier Eintritt in den Innenraum realisiert werden kann. Allerdings ist der Volumenstrom begrenzt. Werden ein oder alle Durchtrittsspalte geöffnet, so wird die Luft im Wesentlichen über die Durchtrittsspalte weitgehend ungehindert in den Innenraum gelangen. Hierdurch kann ein höherer Volumenstrom bereitgestellt werden, allerdings kommt es zu einem Zug beim Eintritt der Luft in den Innenraum.

Bei einer weiteren Ausführungsform weist die Textilblende ein textiles Flächengebilde mit mindestens einer Kettfadenlage und mindestens einer auf der Kettfadenlage aufliegenden Schussfadenlage auf. Es hat sich herausgestellt, dass sich in dieser Ausführungsform der Textilblende besonders ansprechende Lichteffekte erzielen lassen, die sich insbesondere für eine Ambientebeleuchtung eignen. Das textile Flächengebilde weist eine zwei- oder mehrlagige Gewebestruktur aus eine Kettfadenlage bildenden Kettfäden und eine einseitig auf der Kettfadenlage aufliegende Schussfadenlage bildenden Schussfäden auf. Das zweilagige Gewebe erlaubt eine parallele Fadenausrichtung in der jeweiligen Fadenlage bei in weiten Grenzen einstellbarer Fadendichte, wobei die Fäden stets an der gleichen Fadenhalbseite aufeinanderliegen, so dass eine Ablenkung der auftreffenden Lichtstrahlen zur Sichtseite hin gezielt beeinflussbar ist, um überraschende Lichteffekte zu erzielen.

Je nach Ausgestaltung des textilen Flächengebildes lässt sich eine Vielzahl von Lichteffekten realisieren, so dass eine weitreichende Individualisierung des Innenraums des betreffenden Fahrzeugs ermöglicht wird. Auch lässt sich eine Individualisierung beispielsweise mit der Farbe und der Dichte der verwendeten Fäden erzeugen.

Eine weiterführende Ausführungsform zeichnet sich dadurch aus, dass zumindest eine der Lichtquellen relativ zum textilen Flächengebilde bewegbar in der Luftabgabevorrichtung angeordnet ist. Mit einer Veränderung des Abstands der Lichtquelle zum textilen Flächengebilde lassen sich Tiefeneffekte erzielen, die wiederum zur Individualisierung und/oder zur Visualisierung von Informationen verwendet werden können. Bei einer feststehenden Lichtquelle sind die Lichteffekte im Wesentlichen auf die Farbe und die Intensität beschränkt, während mit einer bewegbaren Lichtquelle dynamische Effekte realisiert werden können. Insbesondere dynamische Effekte können als Warnsignal genutzt werden, um beispielsweise auf Gefahrenstellen oder auf Geschwindigkeitsüberschreitungen hinzuweisen.

In einer weitergebildeten Ausführungsform ist der Durchtrittsspalt mittels zumindest einer Klappe ganz oder teilweise verschließbar. Der Luftstrom durch den Durchtrittsspalt kann mit der Klappe eingestellt werden. Die Klappe kann in einer Schließstellung den Durchtrittsspalt ganz verschließen, so dass die Luft nur durch die Textilblende in den Innenraum gelangen kann.

Eine weitergebildete Ausführungsform zeichnet sich dadurch aus, dass zwischen der Textilblende und dem Gehäuse zumindest ein von der Luft durchströmbarer Durchtrittsspalt gebildet wird. Hierdurch wird ein weiterer Austrittsweg geschaffen, über welche die Luft in den Innenraum eintreten kann, ohne die Textilblende durchströmen zu müssen. Beim Durchströmen der Textilblende wird sich ein gewisser Druckverlust einstellen, so dass sich der Luftstrom nicht beliebig erhöhen lässt. Dadurch, dass ein weiterer Austrittskanal unter Umgehung der Textilblende geschaffen wird, kann der Luftstrom erhöht werden. Beispielsweise dann, wenn ein Fahrzeug lange in der Sonne gestanden hat und sich der Innenraum stark aufgeheizt hat, kann zum schnellen Herunterkühlen des Innenraums ein hoher Luftstrom bereitgestellt werden. Ähnliches gilt für den Fall, dass sich der Innenraum beispielsweise im Winter stark abgekühlt hat. Wie bereits erwähnt, kann die Textilblende eine Filterfunktion haben. Wenn sich die Textilblende aber soweit mit Partikeln beladen hat, dass nur noch ein geringer Luftstrom die Textilblende durchqueren kann, kann die Luft hauptsächlich über den Durchtrittsspalt in den Innenraum geleitet werden, so dass die Funktion der Luftabgabevorrichtung erhalten bleibt.

Eine weitere Ausführungsform zeichnet sich dadurch aus, dass die Luftabgabevorrichtung eine Anzahl von weiteren Klappen aufweist, mit welcher die Öffnung ganz oder teilweise verschließbar ist. Hierdurch wird eine weitere Möglichkeit geschaffen, den Luftstrom einzustellen. Mit den weiteren Klappen kann der Luftstrom durch die Textilblende vollständig unterbrochen werden. Wie eingangs erwähnt, kann sich die vorschlagsgemäße Luftabgabevorrichtung über eine große Länge erstrecken. Folglich ist es möglich, einige der weiteren Klappen vollständig in eine Schließstellung zu bringen und andere der weiteren Klappen mehr oder weniger weit zu öffnen. Der Luftstrom kann daher über die Länge der Luftabgabevorrichtung variiert werden. Wenn die Länge der Luftabgabevorrichtung so groß ist, dass die austretende Luft auf mehrere Personen gerichtet ist, kann für jede Person eine individuelle Luftströmung eingestellt werden.

In einer weiteren Ausführungsform kann zumindest eine der Lichtquellen auf der Klappe und/oder der weiteren Klappe angeordnet sein. In den meisten Fällen sind die Klappen und die weiteren Klappen zwischen einer Schließstellung, in welcher sie die Luftströmung sperren, und einer Offenstellung, in welcher sie die Luftströmung freigeben, drehbar gelagert. Insofern können die Lichtquellen so angeordnet werden, dass sie beim Bewegen der Klappen und der weitern Klappen auch mitbewegt werden. Je nach Stellung der Klappen und/oder der weiteren Klappen werden wird die Textilblende aus unterschiedlichen Winkeln und Abständen beleuchtet, so dass allein hieraus ein optischer Effekt erzeugt werden kann, welcher auf die Stellung der Klappen und/oder der weiteren Klappen hinweist, der für die sich im Innenraum aufhaltenden Personen einfach zu erkennen und zuzuordnen ist. Wie oben bereits erwähnt, können aufgrund der Änderung des Abstands zwischen der Lichtquelle und der Textilblende zusätzliche Lichteffekte erzeugt werden. Da die Klappen und/oder die weiteren Klappen bewegbar, insbesondere drehbar in der Luftabgabevorrichtung gelagert sind, sind keine zusätzlichen Baugruppen notwendig, um die Lichtquelle bewegbar in der Luftabgabevorrichtung anzuordnen. Mit einer entsprechenden Anordnung der Drehachse der Klappen und/oder der weiteren Klappen kann die Hauptabstrahlrichtung der Lichtquellen in Bezug zur Textilblende verändert werden, so dass diese angewinkelt beleuchtet werden. Hierdurch können noch weitere Lichteffekte erzeugt werden.

Nach Maßgabe einer weiteren Ausführungsform ist die Textilblende lösbar im Führungskanal befestigt. Die Textilblende kann so gestaltet werden, dass sie eine filternde Wirkung auf die in den Innenraum eingeleitete Luft hat. In diesem Fall kann es notwendig sein, die Textilblende zu reinigen oder gegen eine neue Textilblende auszutauschen, was mit der lösbaren Befestigung deutlich vereinfacht wird. Auch bei sonstigen Beschädigungen wird der Austausch hierdurch erleichtert. Darüber hinaus ist eine nachträgliche Individualisierung möglich, indem die eingebaute Textilblende beim Austausch durch eine Textilblende mit einer anderen optischen Erscheinung ersetzt wird.

Bei einer weitergebildeten Ausführungsform kann der Führungskanal einen oder mehrere Vorsprünge aufweisen, mit welchen die Textilblende mittels eines Verbindungsabschnitts verbindbar ist. Die Vorsprünge können eine leitende Funktion für die Luft im Führungskanal haben. Gleichzeitig können die Vorsprünge zum Befestigen der Textilblende verwendet werden, so dass sich der konstruktive Aufwand zum Befestigen der Textilblende im Führungskanal gering gehalten wird. Die Anzahl der Vorsprünge kann prinzipiell frei gewählt werden.

Bei einer weiteren Ausführungsform kann die Textilblende mittels einer Nut- oder Federverbindung am Gehäuse befestigt sein. Hierdurch kann die Textilblende auf einfache Weise am Gehäuse befestigt werden, ohne dass die Gestaltung des Führungskanals entsprechend angepasst werden muss.

Nach Maßgabe einer weiteren Ausführungsform wird der Durchtrittsspalt zumindest teilweise von einem am Gehäuse befestigten Anschlussbauteil gebildet. Das Anschlussbauteil kann beispielsweise die Instrumententafel oder die Innenverkleidung des Fahrzeugs sein. Das Anschlussbauteil hat daher eine leitende Funktion auf die Luftströmung und kann dazu verwendet werden, die Luft so zu leiten, dass kein für die sich im Innenraum aufhaltenden Personen unangenehmer Zug entsteht. Weitere Bauteile zum Leiten der Luftströmung sind somit nicht notwendig.

Eine Ausgestaltung der Erfindung betrifft ein Personentransportmittel, insbesondere ein Fahrzeug, mit einer Luftabgabevorrichtung nach einem der zuvor beschriebenen Ausführungsformen. Darüber hinaus betrifft eine Ausbildung der Erfindung die Verwendung eines beleuchteten textilen Flächengebildes als Textilblende in einer Luftabgabevorrichtung nach einem der zuvor beschriebenen Ausführungsformen.

Die technischen Effekte und Vorteile, die sich mit dem vorschlagsgemäßen Personentransportmittel sowie der Verwendung des textilen Flächengebildes erreichen lassen, entsprechen denjenigen, die für die vorliegende Luftabgabevorrichtung erörtert worden sind. Zusammenfassend sei darauf hingewiesen, dass im Vergleich zu den bekannten Luftaustrittsdüsen die Luft beim Durchtritt durch die Textilblende verwirbelt wird und weniger gerichtet und stärker diffus in den Innenraum eintritt, so dass ein Zug verringert wird. Der Zug kann zudem aufgrund der Möglichkeit, die Luftabgabevorrichtung über eine relativ große Länge innerhalb des Personentransportmittels zu erstrecken, weiter verringert werden. Im Vergleich zu aufwendig gestalteten Flügelgittern kann die vorschlagsgemäße Textilblende relativ kostengünstig bereitgestellt werden. Darüber hinaus kann die Luftabgabevorrichtung an die Gestaltung seiner Umgebung angepasst werden, so dass sie optisch kaum noch als solche wahrnehmbar ist und als Zierleiste eingesetzt werden kann. Zudem lässt sich die Luftabgabevorrichtung auf einfache Weise individualisieren und kann zum Anzeigen von Informationen verwendet werden.

Beispielhafte Ausführungsformen der Erfindung werden im Folgenden unter Bezugnahme auf die beigefügten Zeichnungen näher erläutert. Es zeigen
- Figur 1a): ein erstes Ausführungsbeispiel einer erfindungsgemäßen Luftabgabevorrichtung anhand einer prinzipiellen Seitenschnittansicht,
- Figur 1b): ein textiles Flächengebilde anhand einer isolierten Schnittdarstellung,
- Figur 1c): das erste Ausführungsbeispiel anhand einer prinzipiellen Schnittansicht entlang der in Figur 1a) definierten Schnittebene X-X,
- Figur 1d): das erste Ausführungsbeispiel anhand einer prinzipiellen Schnittansicht entlang der in Figur 1c) definierten Schnittebene B-B,
- Figur 2a): ein zweites Ausführungsbeispiel einer erfindungsgemäßen Luftabgabevorrichtung in einer ersten Position,
- Figur 2b): das in Figur 2a) gezeigte zweite Ausführungsbeispiel in einer zweiten Position,
- Figur 3a): ein drittes Ausführungsbeispiel einer erfindungsgemäßen Luftabgabevorrichtung in einer ersten Position,
- Figur 3b): das in Figur 3a) gezeigte dritte Ausführungsbeispiel in einer zweiten Position,
- Figur 4: ein viertes Ausführungsbeispiel einer erfindungsgemäßen Luftabgabevorrichtung,
- Figur 5a): ein fünftes Ausführungsbeispiel einer erfindungsgemäßen Luftabgabevorrichtung in einer ersten Position,
- Figur 5b): das in Figur 5a) gezeigte fünfte Ausführungsbeispiel in einer zweiten Position,
- Figur 6: ein sechstes Ausführungsbeispiel einer erfindungsgemäßen Luftabgabevorrichtung,
- Figur 7a): ein siebtes Ausführungsbeispiel einer erfindungsgemäßen Luftabgabevorrichtung in einer ersten Position,
- Figur 7b): das in Figur 7a) gezeigte siebte Ausführungsbeispiel in einer zweiten Position, jeweils anhand einer prinzipiellen Seitenansicht, welche sich bezogen auf die Schnittebene an der Figur 1a) orientieren, und
- Figuren 8a) bis 8e): mehrerer prinzipielle Darstellungen von Lichteffekten, welche mit der vorschlagsgemäßen Textilblende realisiert werden können.

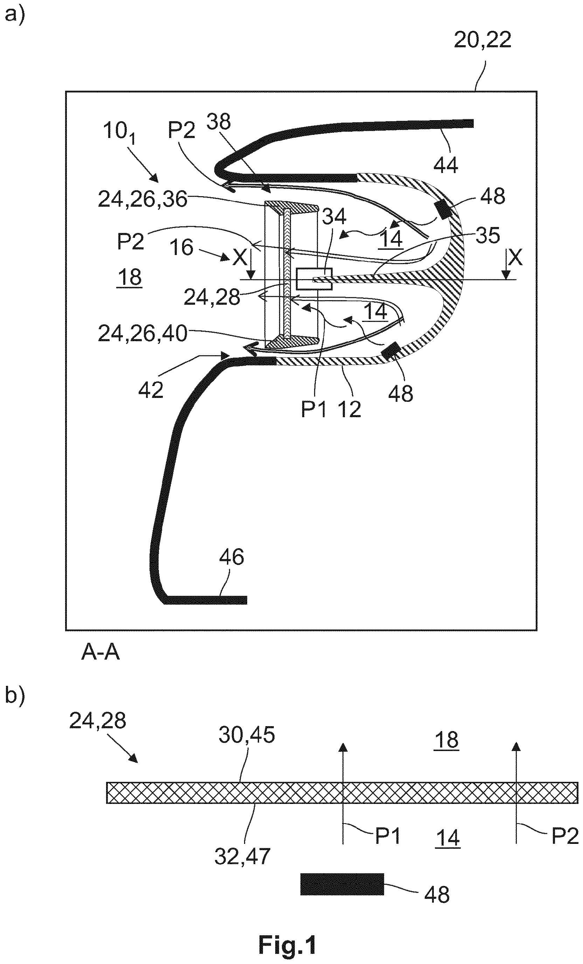

In Figur 1a) ist ein erstes Ausführungsbeispiel der erfindungsgemäßen Luftabgabevorrichtung 10₁ anhand einer prinzipiellen Seitenschnittdarstellung gezeigt. Die Luftabgabevorrichtung 10₁ weist ein Gehäuse 12 auf, welches einen Führungskanal 14 bildet. Durch den Führungskanal 14 kann Luft, welche in einer nicht dargestellten Luftaufbereitungseinrichtung beispielsweise gefiltert, temperiert und/oder befeuchtet oder getrocknet werden kann, geführt werden. Der Führungskanal 14 weist zumindest eine Öffnung 16 auf, über die der Führungskanal 14 mit einem Innenraum 18 eines Personentransportmittels 20, insbesondere eines Fahrzeugs 22, kommuniziert, in welchem die Luftabgabevorrichtung 10₁ angeordnet ist.

Weiterhin umfasst die Luftabgabevorrichtung 10₁ eine Textilblende 24, die einen Rahmen 26 aufweist, in welchem ein textiles Flächengebilde 28 gehalten ist, welches in Figur 1b) vergrößert und separat dargestellt ist. Das Flächengebilde 28 umfasst im dargestellten Ausführungsbeispiel eine Kettfadenlage 30 und eine auf der Kettfadenlage 30 aufliegende Schussfadenlage 32.

Die Textilblende 24 weist ferner einen Verbindungsabschnitt 34 auf, mit welchem die Textilblende 24 mit einem im Führungskanal 14 angeordneten und vom Gehäuse 12 gebildeten Vorsprung 35 verbunden ist. Der Vorsprung 35 kann den Führungskanal 14 längs oder quer unterteilen. Im ersten Ausführungsbeispiel ist die Textilblende 24 fest und nicht ohne Zerstörung lösbar mit dem Vorsprung 35 verbunden, beispielsweise mittels Verschweißen, Verrasten oder Verkleben. Der Verbindungsabschnitt 34 kann als eine Schnittstelle für eine rastende Verbindung der Textilblende 24 im Führungskanal 14 ausgebildet sein. Die Position der Textilblende 24 kann nach dem Befestigen nicht mehr verändert werden. An dieser Stelle soll bereits darauf hingewiesen werden, dass die Textilblende 24 auch lösbar mit dem Vorsprung 35 befestigt sein kann.

Die Textilblende 24 ist so angeordnet, dass sie einen Großteil der Öffnungen 16 verschließt. Zwischen einem oberen Ende 36 der Textilblende 24 und dem Gehäuse 12 wird ein erster Durchtrittsspalt 38 und zwischen einem unteren Ende 40 der Textilblende 24 und dem Gehäuse 12 wird ein zweiter Durchtrittsspalt 42 gebildet.

Das Gehäuse 12 ist mit einem ersten Anschlussbauteil 44 und einem zweiten Anschlussbauteil 46 verbunden, die beide Teil einer Instrumententafel und/oder einer Verkleidung sein können. Das erste Anschlussbauteil 44 ist so geformt, dass der erste Durchtrittsspalt 38 zumindest teilweise auch vom ersten Anschlussbauteil 44 gebildet wird.

Darüber hinaus ist im Führungskanal 14 eine Anzahl von Lichtquellen 48 angeordnet, mit welcher der Führungskanal 14 selbst, aber insbesondere das Flächengebilde 28 der Textilblende 24 beleuchtet werden können. Wie insbesondere aus der Figur 1b) zu erkennen, weist die Textilblende 24 bzw. das textile Flächengebilde eine Sichtseite 45 und eine Rückseite 47 auf. Die Sichtseite 45 weist zum Innenraum 18 und die Rückseite 47 weist zum Führungskanal 14 hin. Die Luft durchströmt die Textilblende 24 folglich von der Rückseite 47 zur Sichtseite 45 hin. Die Strömungsrichtung der Luft ist mit dem Pfeil P2 gekennzeichnet. Wie insbesondere aus der Figur 1b) zu erkennen ist, sind die Lichtquellen 48 so angeordnet, dass die Textilblende 24 bzw. das textile Flächengebilde 28 von der Rückseite 47 beleuchtet werden. Die Hauptabstrahlrichtung ist annäherungsweise mit den ersten Pfeilen P1 gekennzeichnet und fällt im Wesentlichen mit der Strömungsrichtung der Luft durch die Textilblende 24 zusammen.

Die Luft kann aus dem Innenraum 18 oder der Umgebung des Personentransportmittels 20 mittels eines Gebläses angesaugt und in einer Luftaufbereitungseinrichtung aufbereitet werden (nicht dargestellt). Anschließend wird die Luft durch den Führungskanal 14 geleitet und vom Vorsprung 35 umgelenkt. Danach tritt die Luft durch den ersten Durchtrittsspalt 38, den zweiten Durchtrittsspalt 42 und die Textilblende 24 in den Innenraum 18 ein. Während die Luft mehr oder weniger ungehindert durch die beiden Durchtrittsspalte 38, 42 in den Innenraum 18 gelangen kann, muss sie beim Durchströmen der Textilblende 24 einen gewissen Strömungswiderstand überwinden, wodurch der Luftstrom verringert wird. In den Figuren ist dieser Effekt mit den unterschiedlichen Stärken der zweiten Pfeile P2 dargestellt, welche die Hauptströmungsrichtung der Luft annäherungsweise darstellen. Beim Durchströmen der Textilblende 24 wird die Luft verwirbelt und tritt daher diffus in den Innenraum 18 ein, so dass kein für die sich im Innenraum 18 aufhaltenden Personen unangenehmer Zug entsteht.

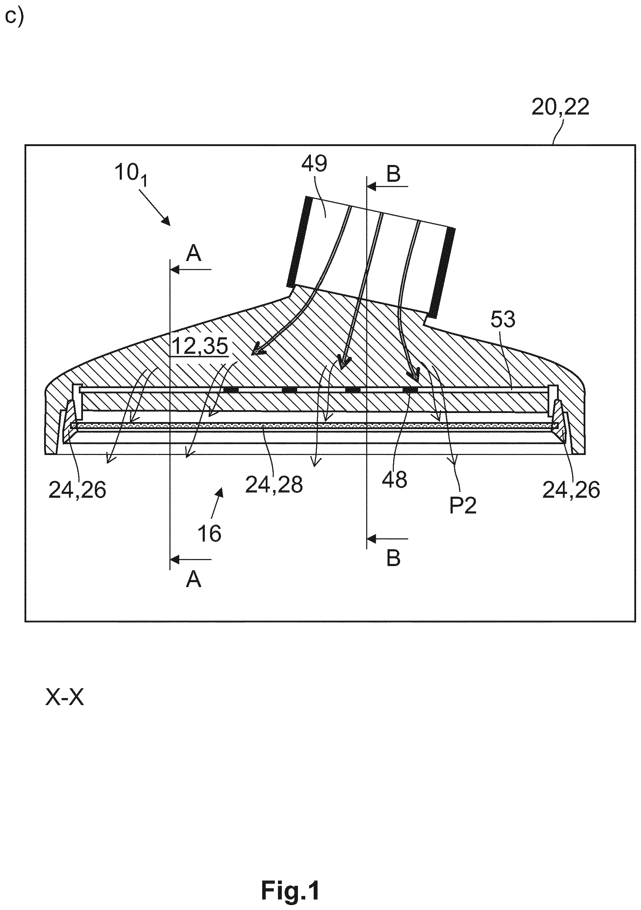

In Figur 1c) ist das erste Ausführungsbeispiel 10₁ der Luftabgabevorrichtung anhand einer prinzipiellen Schnittdarstellung entlang der in Figur 1a) definierten Schnittebene X-X dargestellt, welche durch den Vorsprung 35 verläuft. Man erkennt, dass die Luftabgabevorrichtung einen Eintrittskanal 49 aufweist, durch welchen die aufbereitete Luft in den Führungskanal 14 eintreten kann.

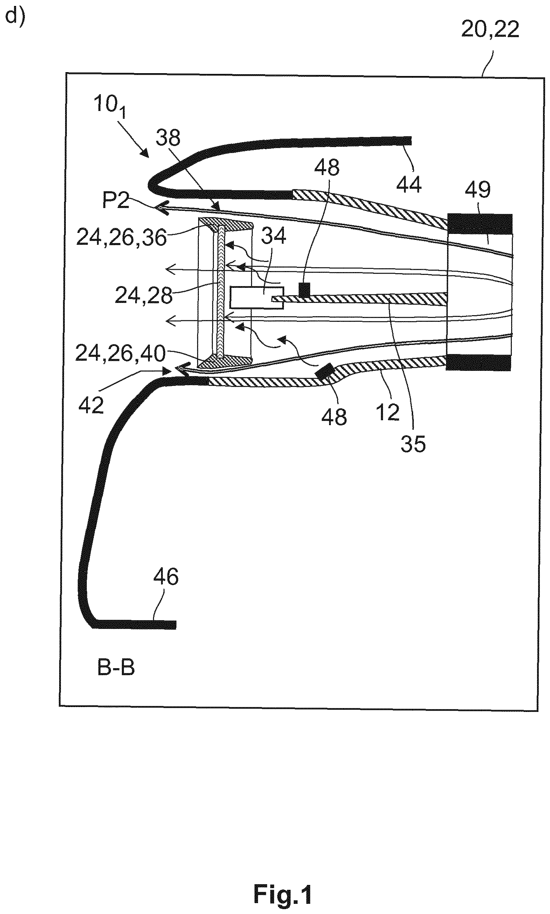

In Figur 1d) ist das erste Ausführungsbeispiel 10₁ der Luftabgabevorrichtung anhand einer prinzipiellen Schnittdarstellung entlang der in Figur 1c) definierten Schnittebene B-B dargestellt. Die Schnittebene B-B verläuft durch den Eintrittskanal 49. In der Zusammenschau der Figuren 1c) und 1d) ist erkennbar, dass einige der Lichtquellen 48 auf dem Vorsprung 35 angeordnet und zu einem Lichtband 53 zusammengefasst sind.

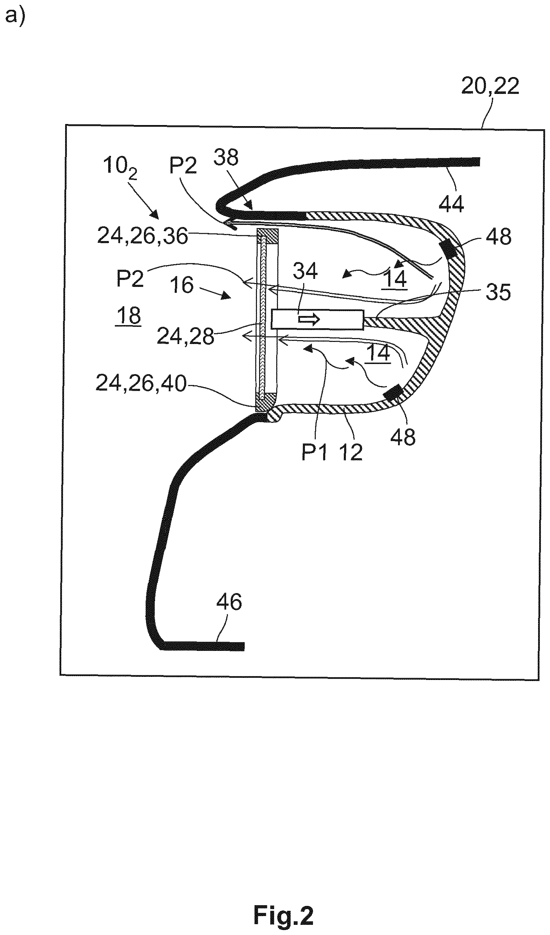

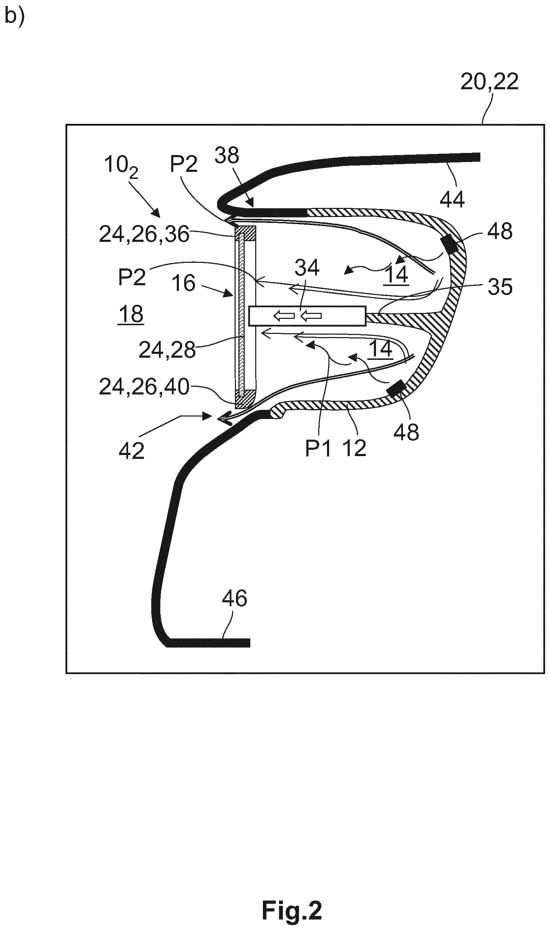

In den Figuren 2a) und 2b) ist ein zweites Ausführungsbeispiel der erfindungsgemäßen Luftabgabevorrichtung 10₂ in einer ersten bzw. in einer zweiten Position ebenfalls anhand einer prinzipiellen Seitenansicht dargestellt. Das zweite Ausführungsbeispiel unterscheidet sich im Wesentlichen in folgenden Punkten vom ersten Ausführungsbeispiel: Die Textilblende 24 ist lösbar am Vorsprung 35 befestigt, wozu die Textilblende 24 über den Verbindungsabschnitt 34 am Vorsprung 35 verclipst sein kann. Zudem ist der Verbindungsabschnitt 34 so ausgestaltet, dass die Textilblende mittels einer translatorischen Bewegung zwischen der ersten und der zweiten Position hin- und her bewegt werden kann. In Figur 2a) befindet sich die Textilblende 24 in der ersten Position, in welcher ihr unterer Rand 40 am Gehäuse 12 anliegt. In Figur 2b) befindet sich die Textilblende 24 in der zweiten Position, in welcher die Textilblende 24 nicht am Gehäuse 12 anliegt, sondern den zweiten Durchtrittsspalt 42 freigibt.

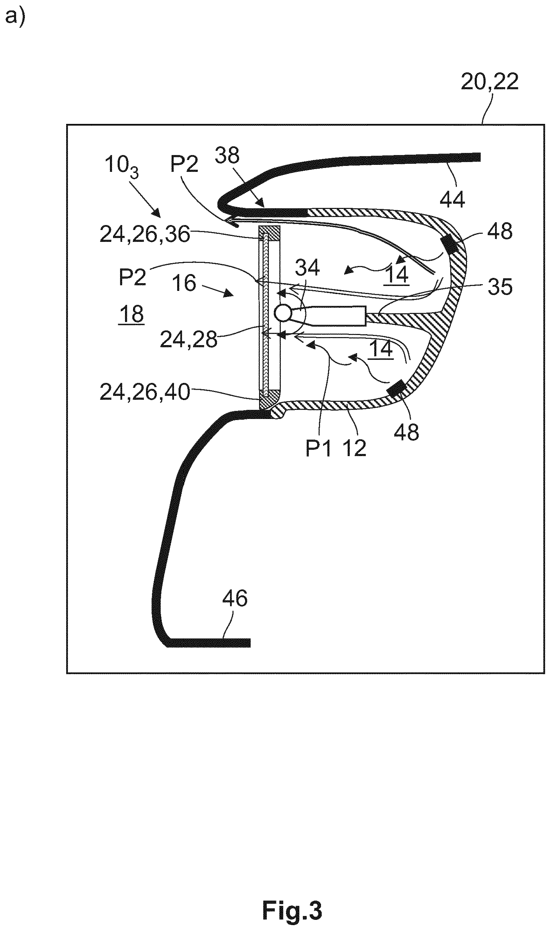

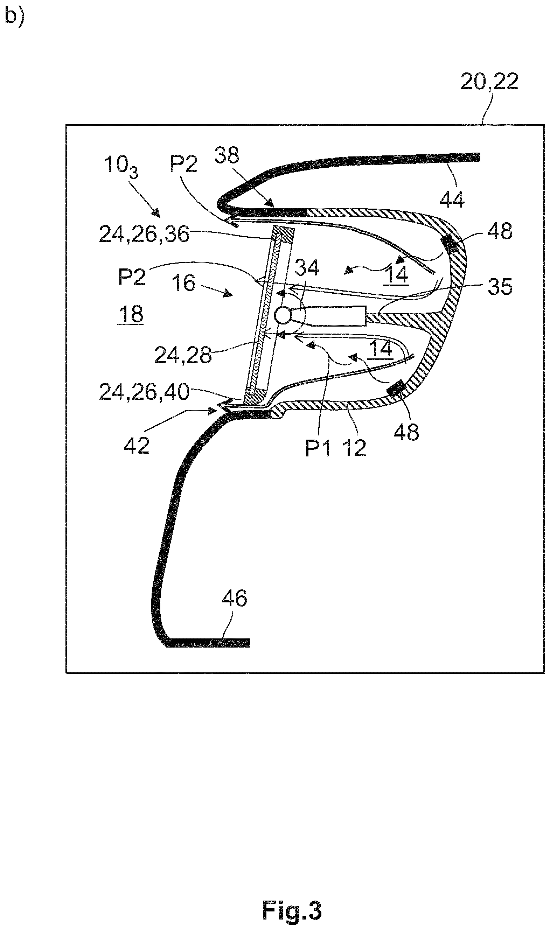

In Figur 3a) ist ein drittes Ausführungsbeispiel der erfindungsgemäßen Luftabgabevorrichtung 10₃ in einer ersten Position und in Figur 3b) in einer zweiten ebenfalls anhand einer prinzipiellen Seitenansicht dargestellt. Es unterscheidet sich vom zweiten Ausführungsbeispiel nur dadurch, dass der Verbindungsabschnitt 34 so ausgeführt ist, dass die Textilblende 24 um eine senkrecht zur Zeichenebene verlaufende Drehachse drehbar am Vorsprung 35 befestigt ist. In der in Figur 3a) dargestellten ersten Position liegt die Textilblende 24 mit dem unteren Rand 40 des Rahmens 26 am Gehäuse 12 an, während sie durch Drehen in die zweite Position, die in Figur 3b) dargestellt ist, mit dem unteren Rand 40 vom Gehäuse weg bewegt wird. Aufgrund dieser Bewegung wird der zweite Durchtrittsspalt 42 freigegeben.

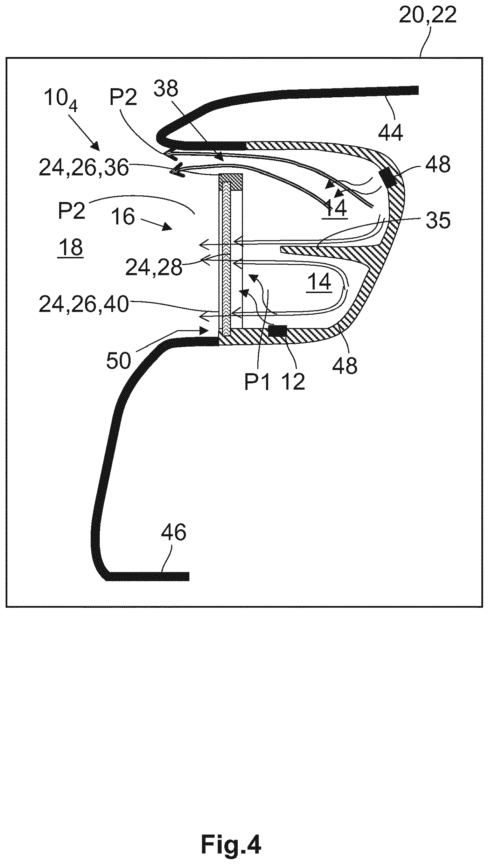

In Figur 4 ist ein viertes Ausführungsbeispiel der erfindungsgemäßen Luftabgabevorrichtung 10₄ ebenfalls anhand einer prinzipiellen Seitenansicht dargestellt. In diesem Ausführungsbeispiel ist die Textilblende 24 mit dem unteren Ende 40 des Rahmens 26 über eine Nutverbindung 50 am Gehäuse 12 befestigt, so dass hier die Verbindung ohne den Verbindungsabschnitt 34 realisiert ist. Zudem ist in diesem Ausführungsbeispiel die Textilblende 24 nicht am Vorsprung 35 und nicht bewegbar direkt am Gehäuse 12 befestigt, so dass hier der erste Durchtrittsspalt 38 dauerhaft geöffnet ist und der zweite Durchtrittsspalt 42 nicht zur Verfügung gestellt werden kann.

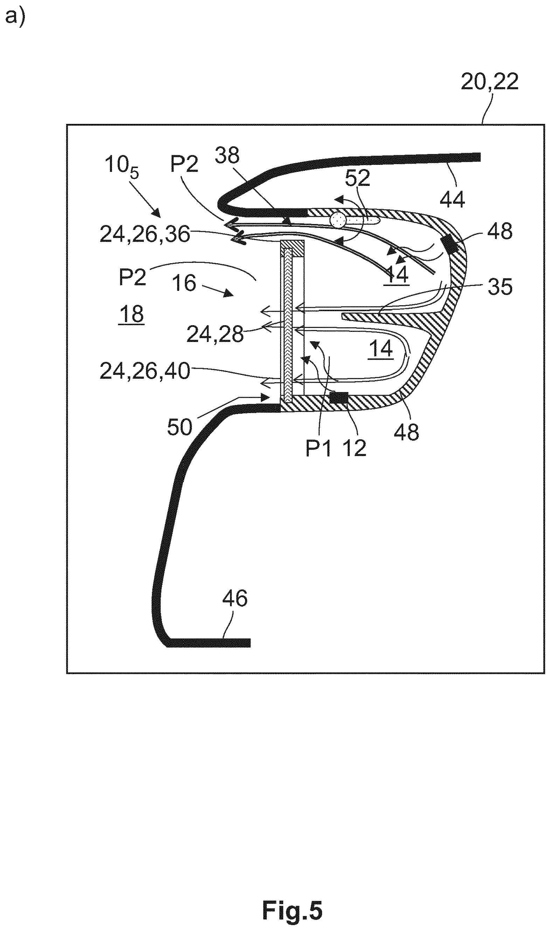

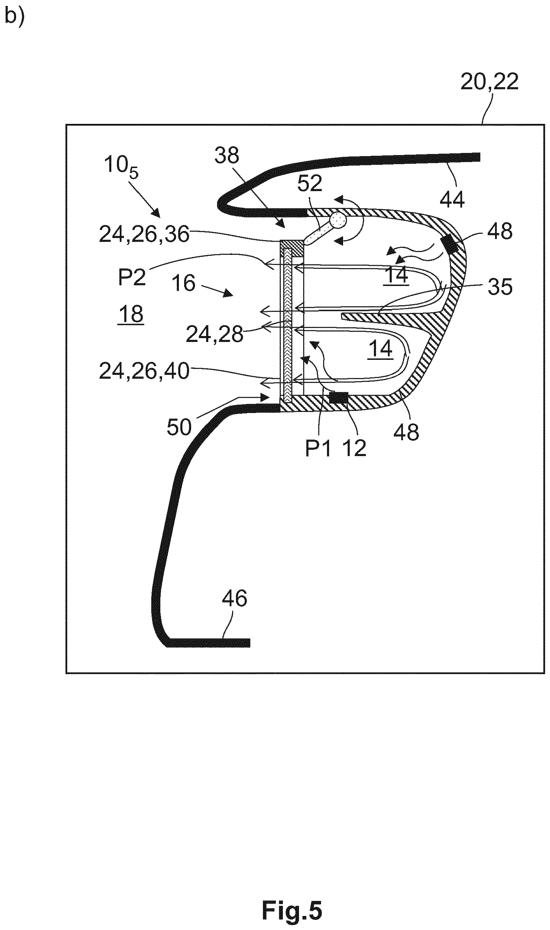

Das in den Figuren 5a) und 5b) ebenfalls anhand einer prinzipiellen Seitenansicht dargestellte fünfte Ausführungsbeispiel 10₅ unterscheidet sich nur dadurch vom vierten Ausführungsbeispiel, dass der erste Durchtrittsspalt 38 mittels einer drehbar gelagerten einarmige Klappe 52 wahlweise verschließbar und zu öffnen ist. In Figur 5a) befindet sich die Klappe 52 in einer Offenstellung, wobei die Klappe 52 in eine Schließstellung gedreht werden kann, die in Figur 5b) dargestellt ist. In der Schließstellung liegt die Klappe 52 einerseits am oberen Ende 36 der Textilblende 24 und andererseits am Gehäuse 12 an. Der erste Durchtrittsspalt 38 kann somit vollständig geschlossen oder mehr oder weniger weit geöffnet werden. Für den Fall, dass der erste Durchtrittsspalt 38 vollständig geschlossen ist, kann die Luft nur noch durch die Textilblende 24 in den Innenraum 18 strömen, wodurch ein diffuses und weitgehend zugfreies Einblasen der Luft in den Innenraum 18 erreicht wird.

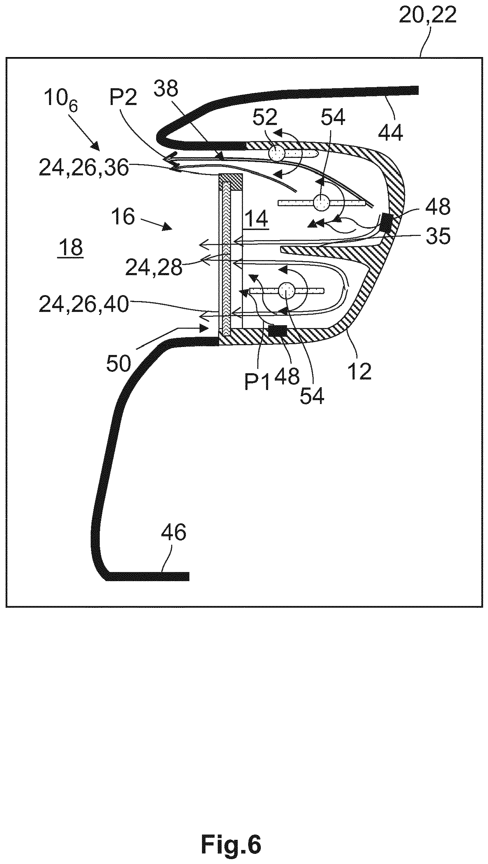

In Figur 6 ist ein sechstes Ausführungsbeispiel der erfindungsgemäßen Luftabgabevorrichtung 10₆ ebenfalls anhand einer prinzipiellen Seitenansicht dargestellt. Das sechste Ausführungsbeispiel entspricht weitgehend dem fünften Ausführungsbeispiel, weist aber darüber hinaus zwei weitere Klappen 54 auf, die drehbar im Gehäuse 12 gelagert und zweiarmig ausgeführt sind. Die weiteren Klappen 54 sind so angeordnet und dimensioniert, dass sie in einer Schließstellung einerseits am Vorsprung 35 anliegen oder nah an den Vorsprung 35 heranreichen und andererseits am Gehäuse 12 anliegen oder nah an das Gehäuse 12 heranreichen. In Figur 6 befinden sich die weiteren Klappen 54 in einer Offenstellung, in welcher sie den Luftstrom nur unwesentlich beeinflussen. Mit den weiteren Klappen 54 kann der Luftstrom eingestellt und reguliert werden. Insbesondere kann die Luftströmung in den Innenraum 18 des Personentransportmittels 20 ganz gesperrt werden.

Die obere der beiden Lichtquelle 48 ist so am Gehäuse 12 angeordnet, dass sie für den Fall, dass sich die obere weitere Klappe 54 in der Schließstellung befindet, von dieser verdeckt wird. Ist die obere weitere Klappe 54 aus intransparentem Material gefertigt, so kann kein Licht von der oberen Lichtquelle 48 an die Textilblende 24 gelangen. Wie bereits erwähnt, wird die Luftströmung in den Innenraum 18 komplett gesperrt, wenn sich die weitere Klappe 54 in der Schließstellung befindet. Das Sperren der Luftströmung wird in diesem Fall optisch dadurch angezeigt, dass die Textilblende 24 nicht beleuchtet werden kann und somit dunkel bleibt.

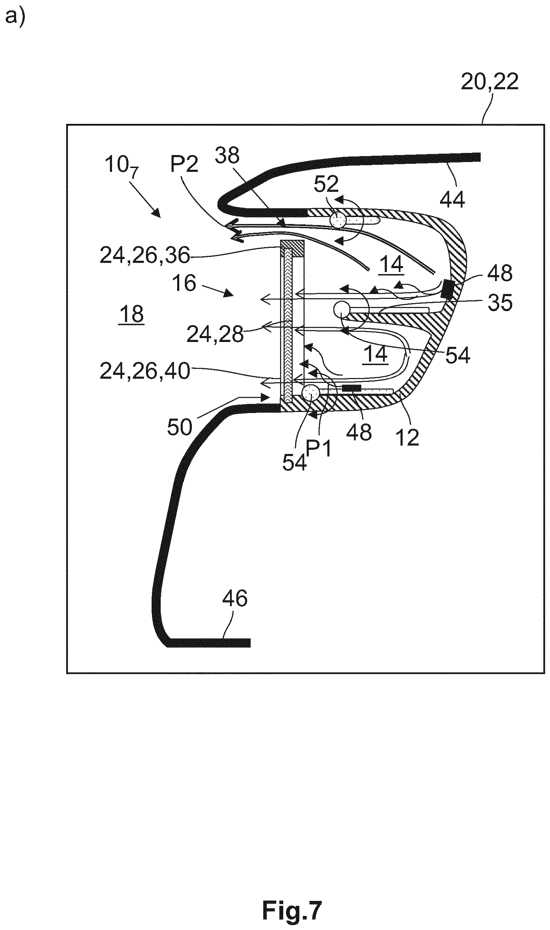

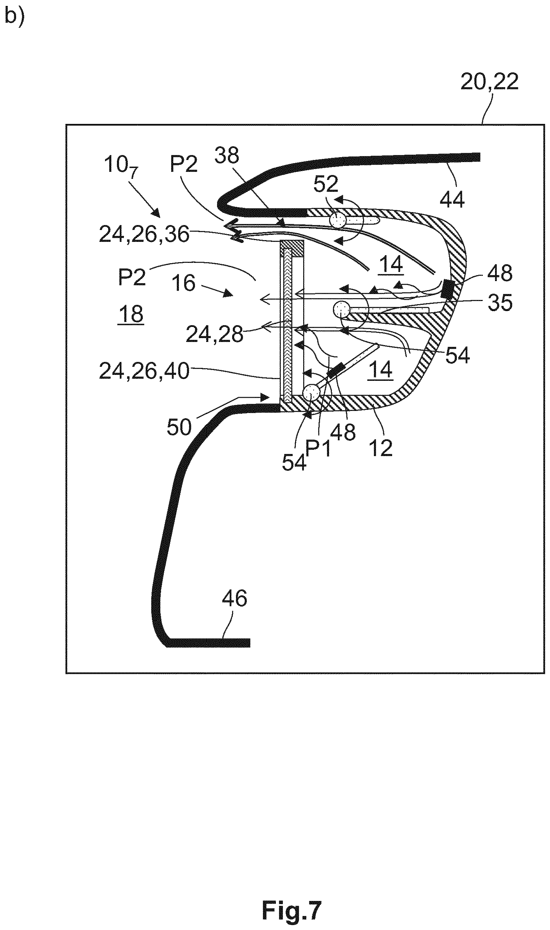

In den Figuren 7a) und 7b) ist ein siebtes Ausführungsbeispiel der erfindungsgemäßen Luftabgabevorrichtung 10₇ in einer ersten Stellung bzw. in einer zweiten Stellung ebenfalls anhand einer prinzipiellen Seitenansicht dargestellt. Das siebte Ausführungsbeispiel gleicht weitegehend dem sechsten Ausführungsbeispiel, allerdings sind die weiteren Klappen 54 einarmig ausgeführt und direkt am Gehäuse 12 bzw. am Vorsprung 35 drehbar befestigt. Weiterhin ist eine der Lichtquellen 48 an der unteren der weiteren Klappen 54 angeordnet und folgt somit der Drehung der weiteren Klappe 54 zwischen der Offenstellung und der Schließstellung, wodurch sich die Hauptabstrahlrichtung dieser Lichtquelle 48 in Bezug auf die Textilblende 24 ändern lässt, was insbesondere aus der Figur 7b) hervorgeht.

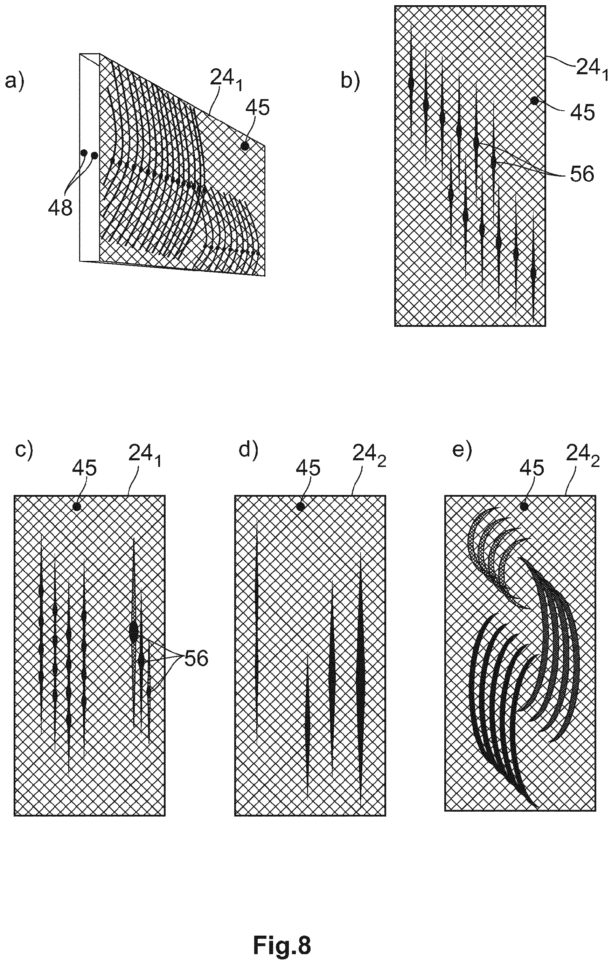

In den Figuren 8a) bis 8c) ist ein erstes Ausführungsbeispiel der Textilblende 24₁ und in den Figuren 8d) und 8e) ein zweites Ausführungsbeispiel der Textilblende 24₂ dargestellt. In Figur 8a) ist die Textilblende 24₁ perspektivisch gezeigt, so dass man die Lichtquellen 48 erkennen kann, die in einem Abstand zur Textilblende 24₁ angeordnet sind. Die Hauptabstrahlrichtung der Lichtquellen 48 verläuft senkrecht zur Textilblende 24₁. Zudem sind in Figur 8a) die Licht- und Tiefeneffekte erkennbar, die durch Beleuchten der Textilblende 24₁ beispielsweise infolge von Reflexionen, Beugungen und Streuungen der Lichtstrahlen beim Durchgang durch die Textilblende 241 erzeugt werden können. In den Figuren 8a) bis 8e) sind die Licht- und Tiefeneffekte dargestellt, wie sie sich auf der Sichtseite 45 darstellen und wie sie vom Innenraum 18 zu sehen sind.

Im ersten Ausführungsbeispiel ist die Textilblende 24₁ so ausgestaltet, dass die einzelnen Lichtquellen 48 jeweils einen Lichtpunkt 56 auf der Sichtseite 45 der Textilblende 24₁ erzeugen. Im zweiten Ausführungsbeispiel ist die Textilblende 24₂ so ausgeführt, dass keine Lichtpunkte 56 entstehen. In Figur 8e) sind Lichteffekte gezeigt, die dann entstehen können, wenn die Hauptabstrahlrichtung der Lichtquellen 48 nicht senkrecht zur Textilblende 24₂, sondern abgewinkelt hierzu verläuft. Die Hauptabstrahlrichtung der Lichtquellen 48 in Bezug auf die Textilblende 242 lässt sich beispielsweise wie im siebte Ausführungsbespiel der Luftabgabevorrichtung 10₇ dadurch realisieren, dass zumindest eine der Lichtquellen 48 auf der drehbaren Klappe 52 oder der drehbaren weiteren Klappe 54 gelagert ist.

### Bezugszeichenliste

- 10, 10₁ - 10₇: Luftabgabevorrichtung
- 12: Gehäuse
- 14: Führungskanal
- 16: Öffnung
- 18: Innenraum

- 20: Personentransportmittel
- 22: Fahrzeug
- 24: Textilblende
- 26: Rahmen
- 28: Flächengebilde

- 30: Kettfadenlage
- 32: Schussfadenlage
- 34: Verbindungsabschnitt
- 35: Vorsprung
- 36: oberes Ende
- 38: erster Durchtrittsspalt

- 40: unteres Ende
- 42: zweiter Druchtrittsspalt
- 44: erstes Anschlussbauteil
- 45: Sichtseite
- 46: zweites Anschlussbauteil
- 47: Rückseite
- 48: Lichtquelle
- 49: Eintrittskanal

- 50: Nutverbindung
- 52: Klappe
- 53: Lichtband
- 54: weitere Klappe
- 56: Lichtpunkte

- P1: erster Pfeil
- P2: zweiter Pfeil

## Patentansprüche

1. Luftabgabevorrichtung zum Abgeben von Luft in einen Innenraum (18) eines Personentransportmittels, insbesondere eines Fahrzeugs, umfassend
- ein Gehäuse (12),
- einen vom Gehäuse (12) gebildeten Führungskanal (14) zum Führen der Luft, wobei der Führungskanal (14) zumindest eine mit dem Innenraum (18) kommunizierende Öffnung (16) aufweist, über welche die Luft in den Innenraum (18) abgebbar ist,
- eine die Öffnung (16) zumindest teilweise verschließende Textilblende (24) mit einer zum Innenraum (18) hinweisenden Sichtseite (45) und einer zum Führungskanal (14) hinweisenden Rückseite (47), wobei
- die Textilblende (24) von der Luft beim Verlassen der Luftabgabevorrichtung (10) durchströmt wird und
- die Textilblende (24) zum Erzeugen von Lichteffekten auf der Sichtseite (45) zumindest von der Rückseite (47) zur Sichtseite (45) hin durchleuchtbar ist, und
- mindestens eine Lichtquelle (48), mit welcher die Rückseite (47) der Textilblende (24) beleuchtbar ist,
**dadurch gekennzeichnet, dass** die Textilblende (24) translatorisch und/oder rotatorisch bewegbar im Führungskanal (14) befestigt ist.

2. Luftabgabevorrichtung nach Anspruch 1,
**dadurch gekennzeichnet, dass** die Textilblende (24) ein textiles Flächengebilde (28) mit mindestens einer Kettfadenlage (30) und mindestens einer auf der Kettfadenlage (30) aufliegenden Schussfadenlage (32) aufweist.

3. Luftabgabevorrichtung nach einem der Ansprüche 1 oder 2, **dadurch gekennzeichnet, dass** zumindest eine der Lichtquellen relativ zum textilen Flächengebilde (28) bewegbar in der Luftabgabevorrichtung (10) angeordnet ist

4. Luftabgabevorrichtung nach einem der vorherigen Ansprüche, **dadurch gekennzeichnet, dass** zwischen der Textilblende (24) und dem Gehäuse (12) zumindest ein von der Luft durchströmbarer Durchtrittsspalt (38, 42) gebildet wird.

5. Luftabgabevorrichtung nach Anspruch 4,
**dadurch gekennzeichnet, dass** der Durchtrittsspalt (38, 42) mittels zumindest einer Klappe (52) ganz oder teilweise verschließbar ist.

6. Luftabgabevorrichtung nach einem der vorherigen Ansprüche, **dadurch gekennzeichnet, dass** die Luftabgabevorrichtung (10) eine Anzahl von weiteren Klappen (54) aufweist, mit welcher die Öffnung (16) ganz oder teilweise verschließbar ist.

7. Luftabgabevorrichtung nach einem der Ansprüche 5 oder 6, **dadurch gekennzeichnet, dass** zumindest eine der Lichtquellen (48) auf der Klappe (52) und/oder der weiteren Klappe (54) angeordnet ist.

8. Luftabgabevorrichtung nach einem der vorherigen Ansprüche, **dadurch gekennzeichnet, dass** die Textilblende (24) lösbar im Führungskanal (14) befestigt ist.

9. Luftabgabevorrichtung nach einem der vorherigen Ansprüche, **dadurch gekennzeichnet, dass** der Führungskanal (14) Vorsprünge aufweist, mit welchen die Textilblende (24) mittels eines Verbindungsabschnitts (34) verbindbar ist.

10. Luftabgabevorrichtung nach einem der Ansprüche 1 bis 8, **dadurch gekennzeichnet, dass** die Textilblende (24) mittels einer Nut- oder Federverbindung am Gehäuse (12) befestigt ist.

11. Luftabgabevorrichtung nach Anspruch 4 oder nach Anspruch 4 und einem der Ansprüche 5 bis 10,
**dadurch gekennzeichnet, dass** der Durchtrittsspalt (38, 42) zumindest teilweise von einem am Gehäuse (12) befestigten Anschlussbauteil (44, 46) gebildet wird.

12. Personentransportmittel, insbesondere Fahrzeug, mit einer Luftabgabevorrichtung (10) nach einem der vorherigen Ansprüche.

## Claims

1. Air supply device for delivering air into an interior (18) of a passenger transportation means, in particular a vehicle, comprising
- a housing (12),
- a guide channel (14) formed by the housing (12) for guiding the air, wherein the guide channel (14) comprises at least one opening (16) in communication with the interior (18) via which the air can be delivered into the interior (18),
- a textile cover (24), which at least partially closes the opening (16) and has a visible side (45) facing the interior (18) and a rear side (47) facing the guide channel (14), wherein
- the air leaving the air supply device (10) flows through the textile cover (24) and,
- for generating light effects on the visible side (45), the textile cover (24) is transilluminable at least in the direction from the rear side (47) to the visible side (45), and
- at least one light source (48), with which the rear side (47) of the textile cover (24) can be illuminated,
**characterised in that** the textile cover (24) is mounted in the guide channel (14) in a translatorically and/or rotatorically movable manner.

2. Air supply device according to Claim 1,
**characterised in that** the textile cover (24) comprises a textile surface structure (28) having at least one warp thread layer (30) and at least one weft thread layer (32) resting on the warp thread layer (30).

3. Air supply device according to any one of Claims 1 or 2,
**characterised in that** at least one of the light sources is disposed in the air supply device (10) so as to be moveable relative to the textile surface structure (28).

4. Air supply device according to any one of the preceding Claims, **characterised in that** at least one passage gap (38, 42) through which air can flow is formed between the textile cover (24) and the housing (12).

5. Air supply device according to Claim 4,
**characterised in that** the passage gap (38, 42) can be completely or partially closed by means of at least one flap (52).

6. Air supply device according to any one of the preceding Claims, **characterised in that** the air supply device (10) comprises a number of further flaps (54) with which the opening (16) can be completely or partially closed.

7. Air supply device according to any one of Claims 5 or 6, **characterised in that** at least one of the light sources (48) is disposed on the flap (52) and/or on the further flap (54).

8. Air supply device according to any one of the preceding Claims, **characterised in that** the textile cover (24) is mounted in the guide channel (14) in a detachable manner.

9. Air supply device according to any one of the preceding Claims, **characterised in that** the guide channel (14) comprises projections, with which the textile cover (24) can be connected by means of a connecting section (34).

10. Air supply device according to any one of Claims 1 to 8, **characterised in that** the textile cover (24) is mounted on the housing (12) by means of a tongue and groove connection.

11. Air supply device according to Claim 4 or according to Claim 4 and any one of Claims 5 to 10,
**characterised in that** the passage gap (38, 42) is formed at least partially by a connecting component (44, 46) mounted on the housing (12).

12. Passenger transportation means, in particular a vehicle, having an air supply device (10) according to any one of the preceding Claims.

## Revendications

1. Dispositif permettant la distribution de l'air dans l'habitacle (18) d'un moyen de transport de personnes, en particulier d'un véhicule comprenant :
- un boîtier (12),
- un canal de guidage (14) formé par le boîtier (12) pour guider l'air, le canal de guidage (14) ayant au moins une ouverture (16) communiquant avec l'habitacle (18), par l'intermédiaire de laquelle l'air peut être distribué dans l'habitacle (18),
- un écran textile (24) fermant au moins partiellement l'ouverture (16), ayant un côté visible (45) tourné vers l'habitacle (18) et un côté arrière (47) tourné vers le canal de guidage (14),
- l'écran textile (24) étant traversé par de l'air sortant du dispositif de distribution d'air (10),
- l'écran textile (24) pouvant être éclairé par transparence au moins à partir du côté arrière (47) vers le côté visible (45) pour obtenir un effet lumineux sur le côté visible (45), et
- au moins une source de lumière (48) permettant d'éclairer le côté arrière (47) de l'écran textile (24),
**caractérisé en ce que**
l'écran textile (24) est mobile en translation et/ou en rotation dans le canal de guidage (14).

2. Dispositif de distribution d'air conforme à la revendication 1,
**caractérisé en ce que**
l'écran textile (24) comporte une structure textile plane (28) ayant au moins une couche de fils de chaîne (30) et au moins une couche de fils de trame (32) appliquée sur la couche de fils de chaîne (30).

3. Dispositif de distribution d'air conforme à l'une des revendications 1 et 2,
**caractérisé en ce qu'**
au moins l'une des sources de lumière est mobile par rapport à la structure textile plane (28) dans le dispositif de distribution d'air (10).

4. Dispositif de distribution d'air conforme à l'une des revendications précédentes,
**caractérisé en ce qu'**
entre l'écran textile (24) et le boîtier (12) est formée au moins une fente de passage (38, 42) pouvant être traversée par de l'air.

5. Dispositif de distribution d'air conforme à la revendication 4,
**caractérisé en ce que**
la fente de passage (38, 42) peut être totalement ou partiellement fermée par au moins un volet (52).

6. Dispositif de distribution d'air conforme à l'une des revendications précédentes,
**caractérisé en ce qu'**
il comporte un ensemble d'autres volets (54) permettant de fermer totalement ou partiellement l'ouverture (16).

7. Dispositif de distribution d'air conforme à l'une des revendications 5 et 6,
**caractérisé en ce qu'**
au moins l'une des sources de lumière (48) est installée sur le volet (52) et/ou sur l'autre volet (54).

8. Dispositif de distribution d'air conforme à l'une des revendications précédentes,
**caractérisé en ce que**
l'écran textile (24) est fixé de manière amovible dans le canal de guidage (14).

9. Dispositif de distribution d'air conforme à l'une des revendications précédentes,
**caractérisé en ce que**
le canal de guidage (14) comporte des saillies avec lesquelles l'écran textile (24) peut être relié au moyen d'un segment de liaison (34).

10. Dispositif de distribution d'air conforme à l'une des revendications 1 à 8,
**caractérisé en ce que**
l'écran textile (24) est fixé sur le boîtier (12) par une liaison à rainures et languettes.

11. Dispositif de distribution d'air conforme à la revendication 4 ou la revendication 4 et à l'une des revendications 5 à 10,
**caractérisé en ce que**
la fente de passage (38, 42) est formée au moins en partie par un élément de connexion (44, 46) fixé sur le boîtier (12).

12. Moyen de transport de personnes, en particulier véhicule équipé d'un dispositif de distribution d'air (10) conforme à l'une des revendications précédentes.
